# EUROPEAN PATENT APPLICATION

(11) **EP 4 641 057 A1**
(43) Date of publication of application: **29.10.2025**
(21) Application number: 25171558.7
(22) Date of filing: 22.04.2025
(51) Int. Cl.: F16K 5/04, F16K 5/10, F16K 5/12, F16K 31/60

(54) **FLOW RATE ADJUSTING DEVICE**

(30) Priority: 26.04.2024 JP 2024072954
(71) Applicant: Surpass Industry Co., Ltd., Gyoda-shi Saitama 361-0037 (JP)
(72) Inventor: IMAI, Hiroshi, Gyoda-shi, 361-0037 (JP); HASUNUMA, Masahiro, Gyoda-shi, 361-0037 (JP)
(74) Representative: Patentwerk B.V.

(57) **Abstract**

Provided is a flow rate adjusting device 100 includes a first member 10 having a valve portion 11 and a second member 20 having an accommodation hole 21 whose cross section is circular, the first member 10 is accommodated rotatably in the second member 20, the second member 20 has an outflow channel 23 configured to guide a fluid from an inner circumferential face 21a of the accommodation hole 21 to an outflow pipe 2 connected to the second member 20, the valve portion 11 has an inflow hole 11b, an outflow hole 11c, and an outflow groove 11e formed in the outer circumferential face 11a circumferentially about a first axis AX1, the outflow groove 11e forms a flow rate adjusting channel extending circumferentially between the accommodation hole 21 and the inner circumferential face 21a and connecting the outflow hole 11c and the outflow channel 23 to each other, and the sectional area of the flow rate adjusting channel gradually decreases in accordance with the distance ranging circumferentially from one end 11e1 of the outflow groove 11e.

## Description

### BACKGROUND

### 1. TECHNICAL FIELD

The present invention relates to a flow rate adjusting device.

### 2. DESCRIPTION OF RELATED ART

Flow rate adjusting devices including a body provided with a valve hole therein and a valve portion having a needle part inserted in the valve hole are conventionally known (see, for example, Japanese Patent No. 5144880). The flow rate adjusting device disclosed in Japanese Patent No. 5144880 is a device that transfers drive force of a motor to a needle part inserted in a valve hole to change the position of the needle part and adjust the clearance formed between the inner circumferential face of the valve hole and the outer circumferential face of the needle part and thereby adjusts the flow rate of a fluid.

The flow rate adjusting device disclosed in Japanese Patent No. 5144880 can dynamically adjust the flow rate of a fluid to a particular flow rate by controlling the motor. On the other hand, when used in applications such as cases where the flow rate of a fluid is maintained constant at a particular flow rate, the flow rate adjusting device disclosed in Japanese Patent No. 5144880 suffers from high manufacturing costs due to a large number of components such as a motor, a mechanism for transferring drive force of the motor to a needle valve, or the like.

Further, in a system to adjust the flow rate of a fluid by changing an insertion level of a needle valve into a valve hole, a relatively large change in a flow rate of a fluid relative to a change in the insertion level of the needle valve makes it difficult to suitably adjust the flow rate to a desired flow rate in a low flow rate range (for example, a range of 30 mL/min or lower).

### BRIEF SUMMARY

The present invention has been made in view of such circumstances and intends to provide a flow rate adjusting device that can be manufactured at relatively low manufacturing costs and can maintain a fluid at any flow rate in a relatively low flow rate range.

The present invention employs the following solutions in order to achieve the above object.

A flow rate adjusting device according to one aspect of the present invention includes: a first member having a valve portion, the valve portion being formed in a circularly columnar shape so as to extend along a first axis; and a second member having an accommodation hole, the accommodation hole being formed so as to extend along the first axis and having a circular cross section orthogonal to the first axis, the first member is accommodated in the second member rotatably about the first axis with an outer circumferential face of the valve portion and an inner circumferential face of the accommodation hole being in contact with each other, the second member has an outflow channel, the outflow channel being formed so as to extend along a second axis orthogonal to the first axis and configured to guide a fluid from the inner circumferential face of the accommodation hole to an outflow pipe connected to the second member, the valve portion has an inflow hole into which a fluid flows, an outflow hole configured to allow a fluid flowing in from the inflow hole to flow out along a third axis orthogonal to the first axis, and at least one outflow groove formed in the outer circumferential face in a circumferential direction about the first axis from one end connected to the outflow hole, the outflow groove forms a flow rate adjusting channel extending in the circumferential direction from the one end to the other end between the outflow groove and the inner circumferential face of the accommodation hole and connecting the outflow hole and the outflow channel to each other, and the sectional area of the flow rate adjusting channel gradually decreases in accordance with a distance in the circumferential direction from the one end of the outflow groove.

According to the flow rate adjusting device of one aspect of the present invention, a fluid that has flown from the inflow hole into the valve portion is guided to the outflow hole along the third axis orthogonal to the first axis along which the valve portion extends. When the third axis along which a fluid is guided to the outflow hole and the second axis along which the outflow channel of the second member extends are arranged to match each other, a flow-through state where a fluid flows out of the outflow hole to the outflow channel is obtained. In contrast, when the third axis along which a fluid is guided to the outflow hole and the second axis along which the outflow channel of the second member extends do not match and the outer circumferential face of the valve portion and the outflow channel of the second member are arranged facing each other, a fully closed state where no fluid flows out of the outflow hole to the outflow channel is obtained.

Further, when the third axis along which a fluid is guided to the outflow hole and the second axis along which the outflow channel of the second member extends do not match and the outflow groove formed in the valve portion and the outflow channel of the second member are arranged facing each other, the flow rate adjusting state where a fluid flows out of the outflow hole to the outflow channel via the flow rate adjusting channel is obtained.

The flow rate adjusting channel is a channel extending circumferentially from the one end to the other end between the outflow groove and the inner circumferential face of the accommodation hole and connecting the outflow hole and the outflow channel to each other. The sectional area of the flow rate adjusting channel gradually decreases in accordance with the circumferential distance from the one end of the outflow groove. Thus, by rotating the valve portion about the first axis to adjust the position of the outflow groove arranged facing the outflow channel, it is possible to adjust a fluid flowing out of the outflow hole to the outflow channel via the flow rate adjusting channel to be at any flow rate.

According to the flow rate adjusting device of one aspect of the present invention, since the flow rate of a fluid can be adjusted to any flow rate without the use of a motor and a transmission mechanism that transfers drive force of the motor to the valve portion, the flow rate adjusting device can be manufactured at relatively low manufacturing costs. Further, by rotating the valve portion about the first axis to adjust the position of the outflow groove arranged facing the outflow channel, it is possible to maintain the fluid at any flow rate in a relatively low flow rate range.

In the flow rate adjusting device according to one aspect of the present invention, a preferable configuration is such that the second member has an inflow channel formed so as to extend along the second axis and configured to guide a fluid from an inflow pipe connected to the second member to the inner circumferential face of the accommodation hole, the valve portion has the inflow hole into which a fluid flows along the third axis and at least one inflow groove formed in the outer circumferential face in the circumferential direction from one end connected to the inflow hole, and the inflow groove forms a connection channel extending in the circumferential direction from the one end to the other end between the inflow groove and the inner circumferential face of the accommodation hole and connecting the inflow channel and the inflow hole to each other.

According to the flow rate adjusting device of the configuration described above, the fluid flowing in from the inflow pipe is guided to the valve portion via the inflow channel of the second member extending along the second axis. When the third axis along which a fluid is guided to the outflow hole and the second axis along which the inflow channel of the second member extends are arranged so as to match each other, a flow-through state where a fluid flows out of the inflow channel into the inflow hole of the valve portion is obtained. In contrast, when the third axis along which a fluid is guided to the outflow hole and the second axis along which the inflow channel of the second member extends do not match and the outer circumferential face of the valve portion and the outflow channel of the second member are arranged facing each other, the fully closed state where the fluid flows into the inflow hole but no fluid flows out of the outflow hole to the outflow channel is obtained.

Further, when the third axis along which a fluid is guided to the outflow hole and the second axis along which the inflow channel of the second member extends do not match and the outflow groove formed in the valve portion and the outflow channel of the second member are arranged facing each other, the flow rate adjusting state where a fluid flowing from the inflow channel into the inflow hole via the connection channel flows out of the outflow hole to the outflow channel via the flow rate adjusting channel is obtained.

According to the flow rate adjusting device of the configuration described above, in the configuration that allows a fluid to flow straight through along the second axis from the inflow channel to the outflow channel, the flow rate adjusting device can be manufactured at relatively low manufacturing costs, and it is possible to maintain the fluid constant at any flow rate in a relatively low flow rate range.

In the flow rate adjusting device of the configuration described above, a preferable form is such that the sectional area of the connection channel gradually decreases in accordance with a distance in the circumferential direction from the one end of the inflow groove.

According to the flow rate adjusting device of the form described above, the sectional area of the connection channel gradually decreases in accordance with the circumferential distance from one end of the inflow groove. Thus, by rotating the valve portion about the first axis to adjust the position of the inflow groove arranged facing the inflow channel, it is possible to adjust a fluid flowing from the inflow hole into the valve portion via the connection channel to be at any flow rate.

In the flow rate adjusting device of the configuration described above, a preferable form is such that the valve portion has a pair of outflow grooves formed in the outer circumferential face in the circumferential direction from the outflow hole to one side and the other side, respectively, and a pair of inflow grooves formed in the outer circumferential face in the circumferential direction from the inflow hole to one side and the other side, respectively.

According to the flow rate adjusting device of the form described above, it is possible to adjust the flow rate of a fluid flowing out of the outflow channel by rotating the valve portion in either one side or the other side circumferentially about the first axis.

The flow rate adjusting device according to one aspect of the present invention may be configured such that the second member has an inflow channel, the inflow channel being formed so as to extend along the first axis and configured to guide a fluid to the valve portion from an inflow pipe connected to the second member, and the valve portion has the inflow hole into which a fluid flows along the first axis.

According to the flow rate adjusting device of the configuration described above, in the configuration that allows a fluid, which flows from the inflow channel into the valve portion along the first axis, to flow to the outflow channel along the second axis, the flow rate adjusting device can be manufactured at relatively low manufacturing costs, and it is possible to maintain the fluid constant at any flow rate in a relatively low flow rate range.

According to the present invention, it is possible to provide a flow rate adjusting device that can be manufactured at relatively low manufacturing costs and can maintain a fluid at any flow rate in a relatively low flow rate range.

### BRIEF DESCRIPTION OF THE SEVERAL VIEWS OF THE DRAWINGS

Fig. 1 is a sectional view illustrating a flow rate adjusting device according to a first embodiment of the present invention and illustrates a fully open state.
Fig. 2 is a plan view of the flow rate adjusting device illustrated in Fig. 1 when viewed from above.
Fig. 3 is an arrow A-A sectional view of the flow rate adjusting device illustrated in Fig. 1.
Fig. 4 is a diagram of a first member illustrated in Fig. 3 when viewed in a direction B.
Fig. 5 is a sectional view illustrating the flow rate adjusting device according to the first embodiment of the present invention and illustrates a fully closed state.
Fig. 6 is an arrow C-C sectional view of the flow rate adjusting device illustrated in Fig. 5.
Fig. 7 is a diagram of the first member illustrated in Fig. 6 when viewed in a direction D.
Fig. 8 is a sectional view illustrating the flow rate adjusting device according to the first embodiment of the present invention and illustrates a flow rate adjusting state.
Fig. 9 is a sectional view illustrating a flow rate adjusting device according to a second embodiment of the present invention and illustrates a fully open state.
Fig. 10 is a sectional view illustrating the flow rate adjusting device according to the second embodiment of the present invention and illustrates a fully closed state.
Fig. 11 is a sectional view illustrating the flow rate adjusting device according to the second embodiment of the present invention and illustrates a flow rate adjusting state.
Fig. 12 is a diagram of a first member illustrated in Fig. 10 when viewed in a direction E.
Fig. 13 is a sectional view illustrating a flow rate adjusting device according to a third embodiment of the present invention and illustrates a fully open state.
Fig. 14 is a plan view of the flow rate adjusting device illustrated in Fig. 13 when viewed from above.
Fig. 15 is an arrow F-F sectional view of the flow rate adjusting device illustrated in Fig. 13.
Fig. 16 is a sectional view illustrating the flow rate adjusting device according to the third embodiment of the present invention and illustrates a fully closed state.
Fig. 17 is a sectional view illustrating the flow rate adjusting device according to the third embodiment of the present invention and illustrates a flow rate adjusting state. Fig. 18 is a sectional view illustrating a flow rate adjusting device according to a fourth embodiment of the present invention and illustrates a flow rate adjusting state.
Fig. 19 is a diagram illustrating a state where a flow rate adjusting device according to another embodiment of the present invention has been attached as a cock of a burette.

### DETAILED DESCRIPTION

### [First Embodiment]

A flow rate adjusting device 100 according to a first embodiment of the present invention will be described below with reference to the drawings. For example, the flow rate adjusting device 100 of the present embodiment is a fluid apparatus installed to a pipe that allows a fluid used in a semiconductor manufacturing device or the like (a liquid such as a chemical liquid or pure water) to flow therethrough. When allowing a fluid flowing in from an inflow pipe 1 to flow out of an outflow pipe 2, the flow rate adjusting device 100 of the present embodiment adjusts the fluid guided to the outflow pipe 2 to be at a desired flow rate (for example, a flow rate of 30 mL/min or lower).

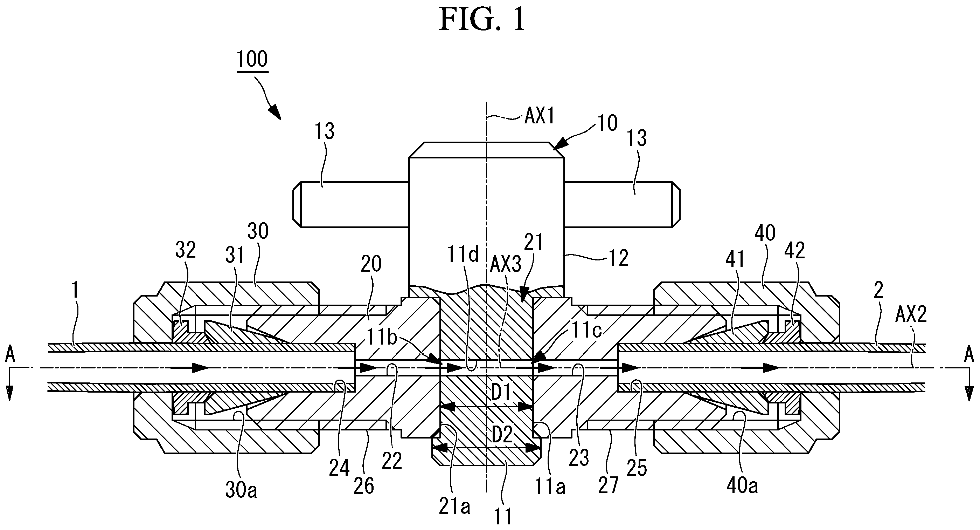

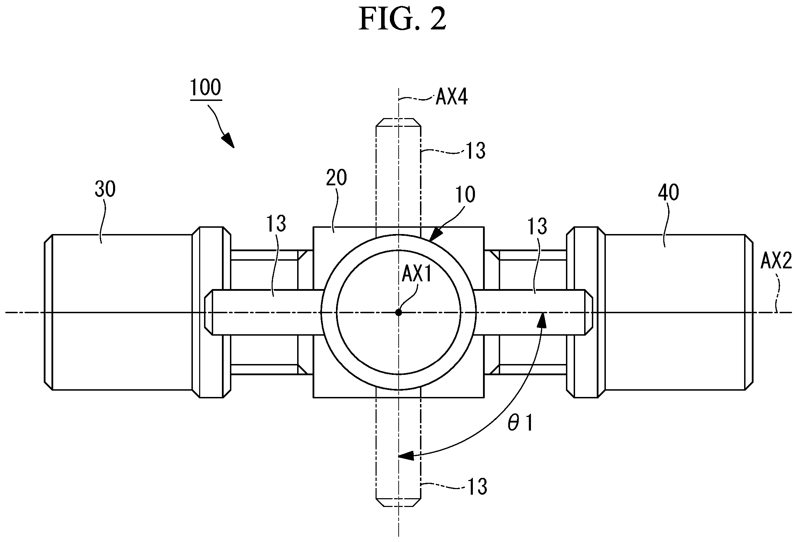

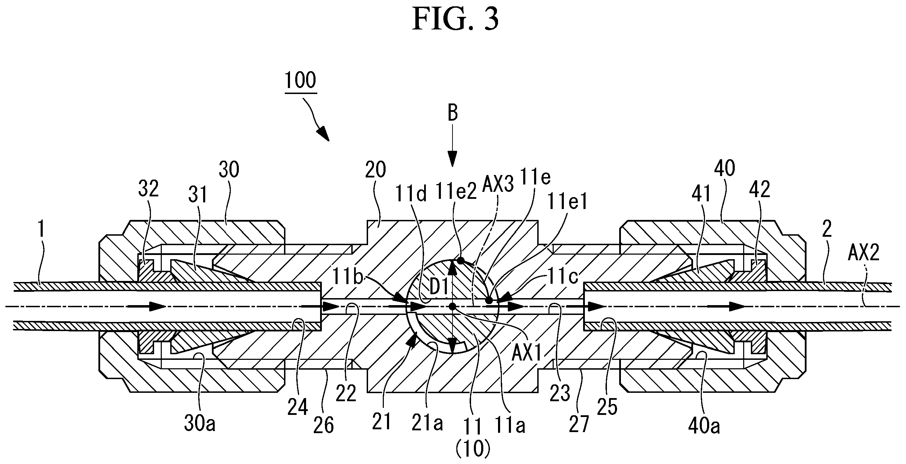

Fig. 1 is a sectional view illustrating the flow rate adjusting device 100 according to the first embodiment of the present invention and illustrates a fully open state. Fig. 2 is a plan view of the flow rate adjusting device 100 illustrated in Fig. 1 when viewed from above. Fig. 3 is an arrow A-A sectional view of the flow rate adjusting device 100 illustrated in Fig. 1. Arrows illustrated in Fig. 1 and Fig. 3 indicate the flowing direction of a fluid. The same applies to other figures.

As illustrated in Fig. 1, the flow rate adjusting device 100 includes a first member 10, a second member 20, an inflow-side nut 30, a front ferule 31, a back ferule 32, an outflow-side nut 40, a front ferule 41, and a back ferule 42.

The first member 10 is a member having a valve portion 11, a body 12, and a pair of knobs 13 connected to the body 12 and integrally formed of a fluorine resin material (for example, PTFE, PFA). The valve portion 11 is formed in a circularly columnar shape so as to extend along a first axis AX1. The valve portion 11 is arranged in contact with an accommodation hole 21 of the second member 20 at a portion having an outer diameter D1, and the portion having the outer diameter D1 is connected to a portion having an outer diameter D2 that is larger than the outer diameter D1. The first member 10 is accommodated in the second member 20 rotatably about the first axis AX1 with the outer circumferential face 11a of the valve portion 11 and the inner circumferential face 21a of the accommodation hole 21 being in contact with each other.

The valve portion 11 has an inflow hole 11b, an outflow hole 11c, an internal channel 11d, and an outflow groove 11e. The inflow hole 11b is a hole into which a fluid flows along a third axis AX3 orthogonal to the first axis AX1. The outflow hole 11c is a hole out of which a fluid flowing in from the inflow hole 11b flows along the third axis AX3. The internal channel 11d is a channel configured to guide a fluid flowing in from the inflow hole 11b to the outflow hole 11c.

The outflow groove 11e is a groove formed in the outer circumferential face 11a circumferentially about the first axis AX1 from one end 11e1, which is connected to the outflow hole 11c, to the other end 11e2. The outflow groove 11e forms a flow rate adjusting channel extending circumferentially from one end 11e1 to the other end 11e2 between the outflow groove 11e and the inner circumferential face 21a of the accommodation hole 21 and connecting the outflow hole 11c and an outflow channel 23 to each other. The outflow groove 11e is formed such that the sectional area of the flow rate adjusting channel gradually decreases in accordance with the circumferential distance from the one end 11e1 of the outflow groove 11e.

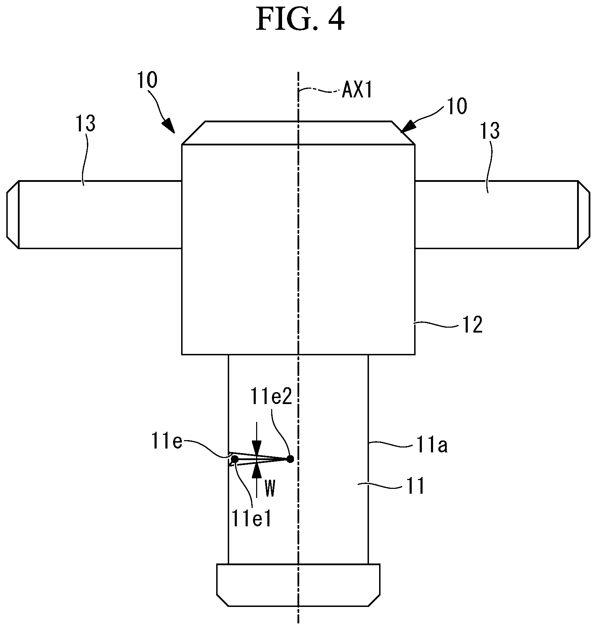

Fig. 4 is a diagram of the first member 10 illustrated in Fig. 3 when viewed in the direction B. As illustrated in Fig. 4, in the outer circumferential face 11a of the valve portion 11 of the first member 10, the outflow groove 11e is formed circumferentially about the first axis AX1 from the one end 11e1, which is connected to the outflow hole 11c, to the other end 11e2. The outflow groove 11e is formed such that the width W in a direction along the first axis AX1 gradually decreases from the one end 11e1 to the other end 11e2.

Further, the outflow groove 11e is formed such that the depth in the radial direction orthogonal to the first axis AX1 gradually decreases from the one end 11e1 to the other end 11e2. The shape of the outflow groove 11e taken along a plane that passes through the first axis AX1 and is parallel to the first axis AX1 is a V-shape.

The second member 20 has the accommodation hole 21 that accommodates the valve portion 11, an inflow channel 22, the outflow channel 23, an insertion hole 24 in which the inflow pipe 1 is inserted, an insertion hole 25 in which the outflow pipe 2 is inserted, an external thread 26 to which an internal thread 30a of the inflow-side nut 30 is fastened, and an external thread 27 to which the internal thread 40a of the outflow-side nut 40 is fastened. The second member 20 is a member in which the above portions are integrally formed of a fluorine resin material (for example, PCTFE, PTFE, PFA) or polycarbonate. The accommodation hole 21 is a hole formed extending along the first axis AX1 and having a circular cross section orthogonal to the first axis AX1.

The inflow channel 22 is a channel formed extending along a second axis AX2 orthogonal to the first axis AX1. The inflow channel 22 guides a fluid from the inflow pipe 1 connected to the second member 20 to the inner circumferential face 21a of the accommodation hole 21.

The outflow channel 23 is a channel formed extending along the second axis AX2 orthogonal to the first axis AX1. The outflow channel 23 guides a fluid from the inner circumferential face 21a of the accommodation hole 21 of the second member 20 to the outflow pipe 2 connected to the second member 20.

As illustrated in Fig. 1, when the third axis AX3 along which a fluid is guided to the outflow hole 11c of the valve portion 11 and the second axis AX2 along which the inflow channel 22 and the outflow channel 23 of the second member 20 extend are arranged so as to match each other, the flow rate adjusting device 100 is in a fully open state where a fluid flows from the inflow channel 22 into the inflow hole 11b of the valve portion 11 and the fluid flows out of the outflow hole 11c to the outflow channel 23.

As illustrated in Fig. 2, when applying a fully open state to the flow rate adjusting device 100, the operator adjusts the rotational position about the first axis AX1 of the first member 10 so that a pair of knobs 13 are arranged along the second axis AX2. In contrast, when applying a fully closed state to the flow rate adjusting device 100, the operator adjusts the rotational position about the first axis AX1 of the first member 10 so that the pair of knobs 13 are arranged along a fourth axis AX4 orthogonal to both the first axis AX1 and the second axis AX2.

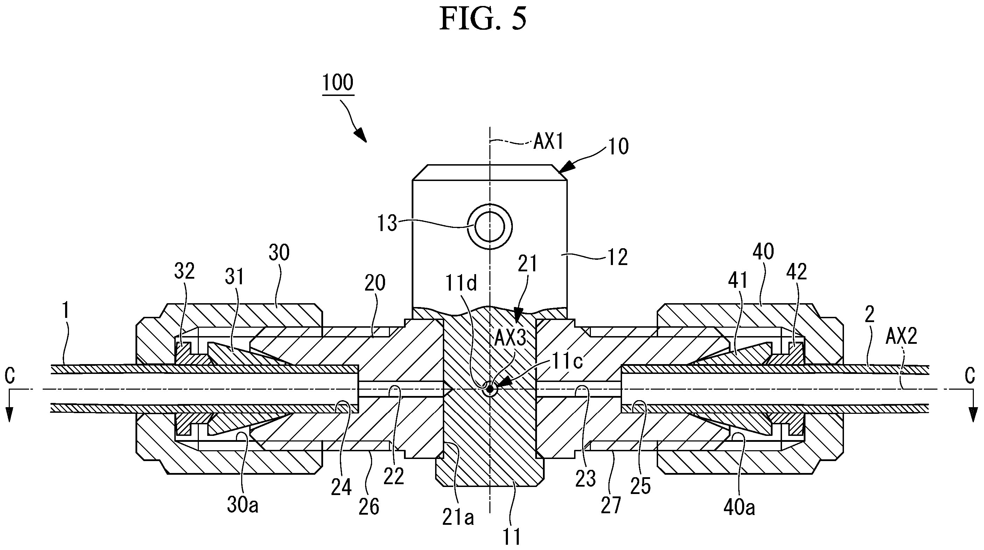

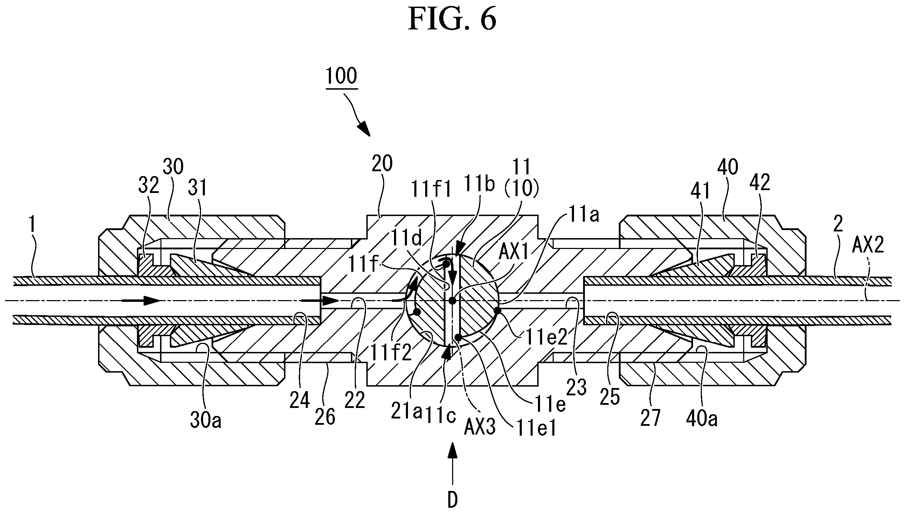

As illustrated in Fig. 2, when switching the flow rate adjusting device 100 from the fully open state to the fully closed state, the operator rotates the knobs 13 by an angle θ1 (for example, 90°) about the first axis AX1. Fig. 5 is a sectional view illustrating the flow rate adjusting device 100 according to the first embodiment of the present invention and illustrates the fully closed state. Fig. 6 is an arrow C-C sectional view of the flow rate adjusting device 100 illustrated in Fig. 5.

As illustrated in Fig. 5 and Fig. 6, when the third axis AX3 along which a fluid is guided to the outflow hole 11c of the valve portion 11 and the second axis AX2 along which the outflow channel 23 of the second member 20 extends do not match and the outer circumferential face 11a of the valve portion 11 and the outflow channel 23 of the second member 20 are arranged facing each other, the fully closed state where no fluid flows out of the outflow hole 11c to the outflow channel 23 is obtained.

As illustrated in Fig. 6, in the outer circumferential face 11a of the valve portion 11 of the first member 10, the inflow groove 11f is formed circumferentially about the first axis AX1 from one end 11f1, which is connected to the inflow hole 11b, to the other end 11f2. The inflow groove 11f is formed such that the width W in a direction along the first axis AX1 is constant from the one end 11f1 to the other end 11f2. Further, the inflow groove 11f is formed such that the depth in the radial direction orthogonal to the first axis AX1 is constant from the one end 11f1 to the other end 11f2. The shape of the inflow groove 11f taken along a plane that passes through the first axis AX1 and is parallel to the first axis AX1 is a V-shape.

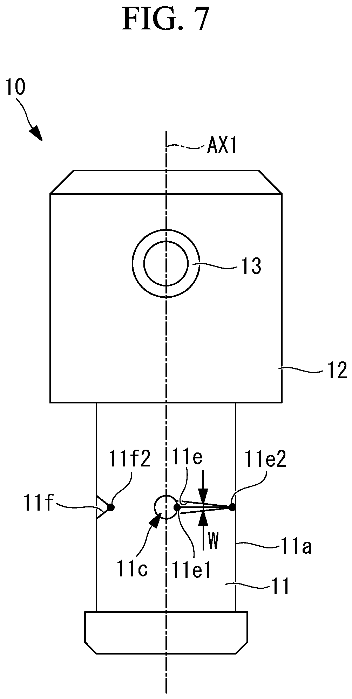

Fig. 7 is a diagram of the first member 10 illustrated in Fig. 6 when viewed in the direction D. As illustrated in Fig. 7, in the outer circumferential face 11a of the valve portion 11 of the first member 10, the outflow groove 11e is formed circumferentially about the first axis AX1 from the one end 11e1, which is connected to the outflow hole 11c, to the other end 11e2.

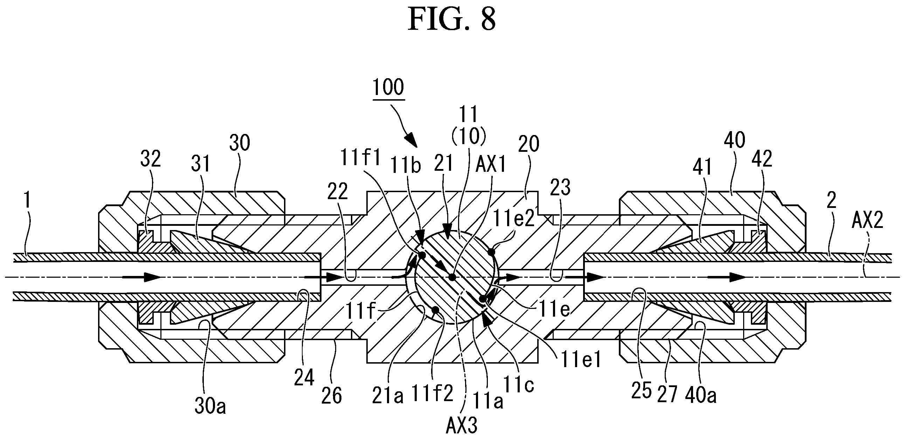

When applying a flow rate adjusting state between the fully open state and the fully closed state to the flow rate adjusting device 100, the operator moves the knobs 13 to a desired rotational position between the position of the fully open state indicated by the solid line in Fig. 2 and the position of the fully closed state indicated by the dotted line in Fig. 2. Fig. 8 is a sectional view illustrating the flow rate adjusting device 100 according to the first embodiment of the present invention and illustrates the flow rate adjusting state. Fig. 8 illustrates an example in which the operator has adjusted the rotational position of the knobs 13 so that the angle θ1 illustrated in Fig. 2 has become 45°.

As illustrated in Fig. 8, the inflow groove 11f forms a connection channel extending circumferentially from the one end 11f1 to the other end 11f2 between the inflow groove 11f and the inner circumferential face 21a of the accommodation hole 21 and connecting the inflow channel 22 and the inflow hole 11b to each other. When the flow rate adjusting device 100 is in the flow rate adjusting state, a fluid flows from the inflow channel 22 into the inflow hole 11b of the valve portion 11 via the connection channel, and the fluid is guided from the outflow hole 11c to the outflow channel 23 via the flow rate adjusting channel.

The flow rate of a fluid guided from the outflow hole 11c to the outflow channel 23 changes in accordance with the angle θ1 about the first axis AX1 relative to the rotational position of the knobs 13 in the fully open state. The larger the angle θ1 is, the lower the flow rate of a fluid guided from the outflow hole 11c to the outflow channel 23 is, and the smaller the angle θ1 is, the higher the flow rate of a fluid guided from the outflow hole 11c to the outflow channel 23 is.

According to the flow rate adjusting device 100 of the present embodiment described above, the following effects and advantages are achieved.

According to the flow rate adjusting device 100 of the present embodiment, a fluid that has flown from the inflow hole 11b into the valve portion 11 is guided to the outflow hole 11c along the third axis AX3 orthogonal to the first axis AX1 along which the valve portion 11 extends. When the third axis AX3 along which a fluid is guided to the outflow hole 11c and the second axis AX2 along which the outflow channel 23 of the second member 20 extends are arranged to match each other, a flow-through state where a fluid flows out of the outflow hole 11c to the outflow channel 23 is obtained.

In contrast, when the third axis AX3 along which a fluid is guided to the outflow hole 11c and the second axis AX2 along which the outflow channel 23 of the second member 20 extends do not match and the outer circumferential face 11a of the valve portion 11 and the outflow channel 23 of the second member 20 are arranged facing each other, the fully closed state where no fluid flows out of the outflow hole 11c to the outflow channel 23 is obtained.

Further, when the third axis AX3 along which a fluid is guided to the outflow hole 11c and the second axis AX2 along which the outflow channel 23 of the second member 20 extends do not match and the outflow groove 11e formed in the valve portion 11 and the outflow channel 23 of the second member 20 are arranged facing each other, the flow rate adjusting state where a fluid flows out of the outflow hole 11c to the outflow channel 23 via the flow rate adjusting channel is obtained.

The flow rate adjusting channel is a channel extending circumferentially from the one end 11e1 to the other end 11e2 between the outflow groove 11e and the inner circumferential face 21a of the accommodation hole 21 and connecting the outflow hole 11c and the outflow channel 23 to each other. The sectional area of the flow rate adjusting channel gradually decreases in accordance with the circumferential distance from the one end 11e1 of the outflow groove 11e. Thus, by rotating the valve portion 11 about the first axis AX1 to adjust the position of the outflow groove 11e arranged facing the outflow channel 23, it is possible to adjust a fluid flowing out of the outflow hole 11c to the outflow channel 23 via the flow rate adjusting channel to be at any flow rate.

According to the flow rate adjusting device 100 of the present embodiment, since the flow rate of a fluid can be adjusted to any flow rate without the use of a motor and a transmission mechanism that transfers drive force of the motor to the valve portion, the flow rate adjusting device 100 can be manufactured at relatively low manufacturing costs. Further, by rotating the valve portion 11 about the first axis AX1 to adjust the position of the outflow groove 11e arranged facing the outflow channel 23, it is possible to maintain the fluid at any flow rate in a relatively low flow rate range.

According to the flow rate adjusting device 100 of the present embodiment, the fluid flowing in from the inflow pipe 1 is guided to the valve portion **11** via the inflow channel 22 of the second member 20 extending along the second axis AX2. When the third axis AX3 along which a fluid is guided to the outflow hole 11c and the second axis AX2 along which the inflow channel 22 of the second member 20 extends are arranged so as to match each other, the flow-through state where a fluid flows out of the inflow channel 22 into the inflow hole 11b of the valve portion 11 is obtained.

In contrast, when the third axis AX3 along which a fluid is guided to the outflow hole 11c and the second axis AX2 along which the inflow channel 22 of the second member 20 extends do not match and the outer circumferential face 11a of the valve portion 11 and the outflow channel 23 of the second member 20 are arranged facing each other, the fully closed state where the fluid flows into the inflow hole 11b but no fluid flows out of the outflow hole 11c to the outflow channel 23 is obtained.

Further, when the third axis AX3 along which a fluid is guided to the outflow hole 11c and the second axis AX2 along which the inflow channel 22 of the second member 20 extends do not match and the outflow groove 11e formed in the valve portion 11 and the outflow channel 23 of the second member 20 are arranged facing each other, the flow rate adjusting state where a fluid flowing from the inflow channel 22 into the inflow hole 11b via the connection channel flows out of the outflow hole 11c to the outflow channel 23 via the flow rate adjusting channel is obtained.

According to the flow rate adjusting device 100 of the present embodiment, in the configuration that allows a fluid to flow straight through along the second axis AX2 from the inflow channel 22 to the outflow channel 23, the flow rate adjusting device 100 can be manufactured at relatively low manufacturing costs, and it is possible to maintain the fluid constant at any flow rate in a relatively low flow rate range.

### [Second Embodiment]

Next, a flow rate adjusting device 100A according to a second embodiment of the present invention will be described with reference to the drawings. Since the second embodiment is a modified example from the first embodiment, some description thereof will be omitted below as being the same as the first embodiment except as specifically described below.

In the flow rate adjusting device 100 according to the first embodiment, the inflow groove 11f is formed such that the width W in the direction along the first axis AX1 and the depth in the radial direction are constant from the one end 11f1 to the other end 11f2. Further, the inflow groove 11f is formed in the outer circumferential face 11a of the valve portion 11 to one side in the circumferential direction from the inflow hole 11b, and the outflow groove 11e is formed in the outer circumferential face 11a of the valve portion 11 to one side in the circumferential direction from the outflow hole 11c.

In contrast, in the flow rate adjusting device 100A according to the present embodiment, the inflow groove 11f is such that the width W in the direction along the first axis AX1 and the depth in the radial direction gradually decrease from one end connected to the inflow hole 11b to the other end. Further, the inflow groove 11f is formed in the outer circumferential face 11a of the valve portion 11 in a curved line circumferentially from the inflow hole 11b to one side and the other side, respectively, and the outflow groove 11e is formed in the outer circumferential face 11a of the valve portion 11 in a curved line circumferentially from the outflow hole 11c to one side and the other side, respectively.

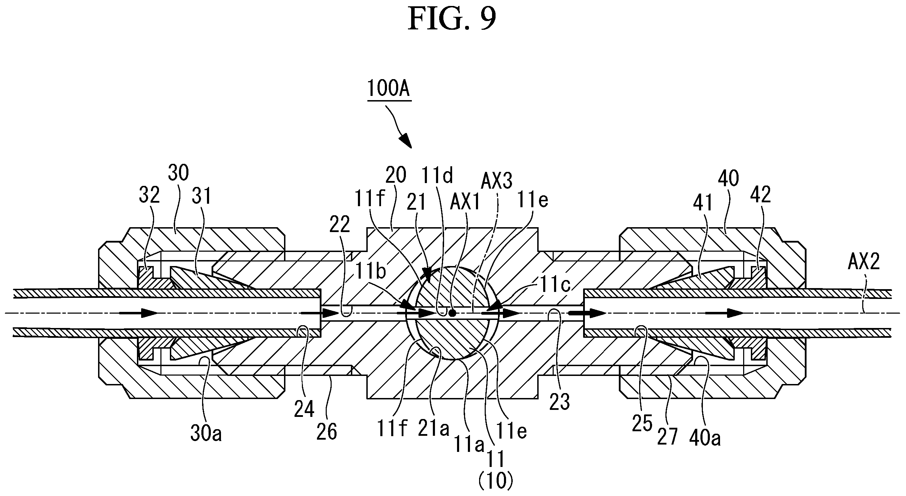

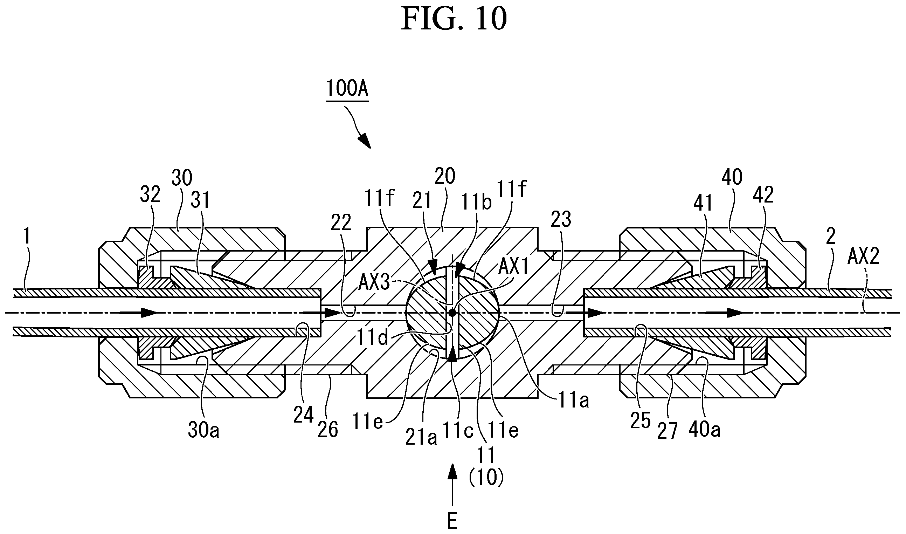

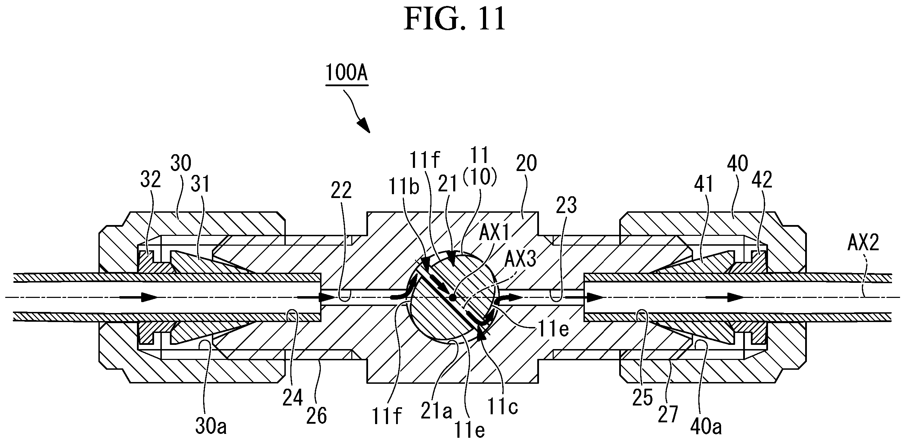

Fig. 9 is a sectional view illustrating the flow rate adjusting device 100A according to a second embodiment of the present invention and illustrates the fully open state. Fig. 10 is a sectional view illustrating the flow rate adjusting device 100A according to the second embodiment of the present invention and illustrates the fully closed state. Fig. 11 is a sectional view illustrating the flow rate adjusting device 100A according to the second embodiment of the present invention and illustrates the flow rate adjusting state.

As illustrated in Fig. 9, when the third axis AX3 along which a fluid is guided to the outflow hole 11c of the valve portion 11 and the second axis AX2 along which the inflow channel 22 and the outflow channel 23 of the second member 20 extend are arranged so as to match each other, the flow rate adjusting device 100A is in the fully open state where a fluid flows from the inflow channel 22 into the inflow hole 11b of the valve portion 11 and the fluid flows out of the outflow hole 11c to the outflow channel 23.

As illustrated in Fig. 10, when the third axis AX3 along which a fluid is guided to the outflow hole 11c of the valve portion 11 and the second axis AX2 along which the outflow channel 23 of the second member 20 extends do not match and the outer circumferential face 11a of the valve portion 11 and the outflow channel 23 of the second member 20 are arranged facing each other, the fully closed state where no fluid flows out of the outflow hole 11c to the outflow channel 23 is obtained.

As illustrated in Fig. 11, when the third axis AX3 along which a fluid is guided to the outflow hole 11c and the second axis AX2 along which the outflow channel 23 of the second member 20 extends do not match and the outflow groove 11e formed in the valve portion 11 and the outflow channel 23 of the second member 20 are arranged facing each other, the flow rate adjusting state where a fluid flows out of the outflow hole 11c to the outflow channel 23 via the flow rate adjusting channel is obtained.

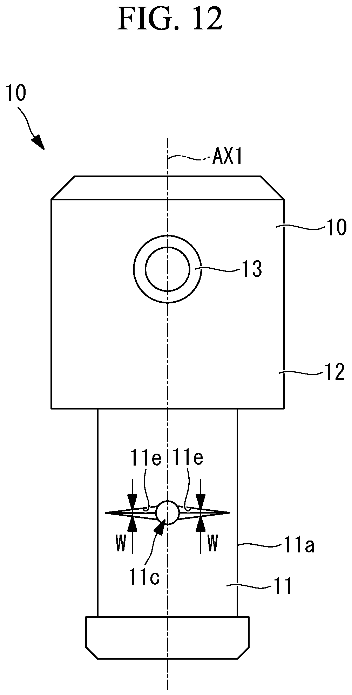

Fig. 12 is a diagram of the first member 10 illustrated in Fig. 10 when viewed in the direction E. As illustrated in Fig. 9 to Fig. 12, the valve portion 11 has a pair of outflow grooves 11e formed in the outer circumferential face 11a circumferentially from the outflow hole 11c to one side and the other side, respectively. Further, the valve portion 11 has a pair of inflow grooves 11f formed in the outer circumferential face 11a circumferentially from the inflow hole 11b to one side and the other side, respectively. As illustrated in Fig. 9 to Fig. 12, in the flow rate adjusting device 100A according to the present embodiment, each inflow groove 11f has the width W in the direction along the first axis AX1 and the depth in the radial direction that gradually decrease from one end connected to the inflow hole 11b to the other end.

In the flow rate adjusting device 100A according to the present embodiment, each inflow groove 11f has the width W in the direction along the first axis AX1 and the depth in the radial direction that gradually decrease along the first axis AX1 from one end connected to the inflow hole 11b to the other end. Accordingly, the sectional area of the connection channel defined by the inflow groove 11f and the inner circumferential face 21a gradually decreases in accordance with the circumferential distance from one end of the inflow groove 11f.

Further, the outflow groove 11e has the width W in the direction along the first axis AX1 and the depth in the radial direction that gradually decrease from one end connected to the outflow hole 11c to the other end. Accordingly, the sectional area of the flow rate adjusting channel defined by the outflow groove 11e and the inner circumferential face 21a gradually decreases in accordance with the circumferential distance from one end of the outflow groove 11e.

According to the flow rate adjusting device 100A of the present embodiment, the sectional area of the connection channel gradually decreases in accordance with the circumferential distance from one end of the inflow groove 11f. Thus, by rotating the valve portion 11 about the first axis AX1 to adjust the position of the inflow groove 11f arranged facing the inflow channel 22, it is possible to adjust a fluid flowing from the inflow hole 11b into the valve portion 11 via the connection channel to be at any flow rate.

### [Third Embodiment]

Next, a flow rate adjusting device 100B according to a third embodiment of the present invention will be described with reference to the drawings. Since the third embodiment is a modified example from the first embodiment, some description thereof will be omitted below as being the same as the first embodiment except as specifically described below.

The flow rate adjusting device 100 according to the first embodiment is to allow a fluid to flow straight through along the second axis AX2 from the inflow channel 22 to the outflow channel 23. In contrast, the flow rate adjusting device 100B of the present embodiment is to change, by 90°, the flowing direction of a fluid flowing into the valve portion 11 along the first axis AX1 and thereby allow the fluid to flow through to the outflow channel 23 along the second axis AX2.

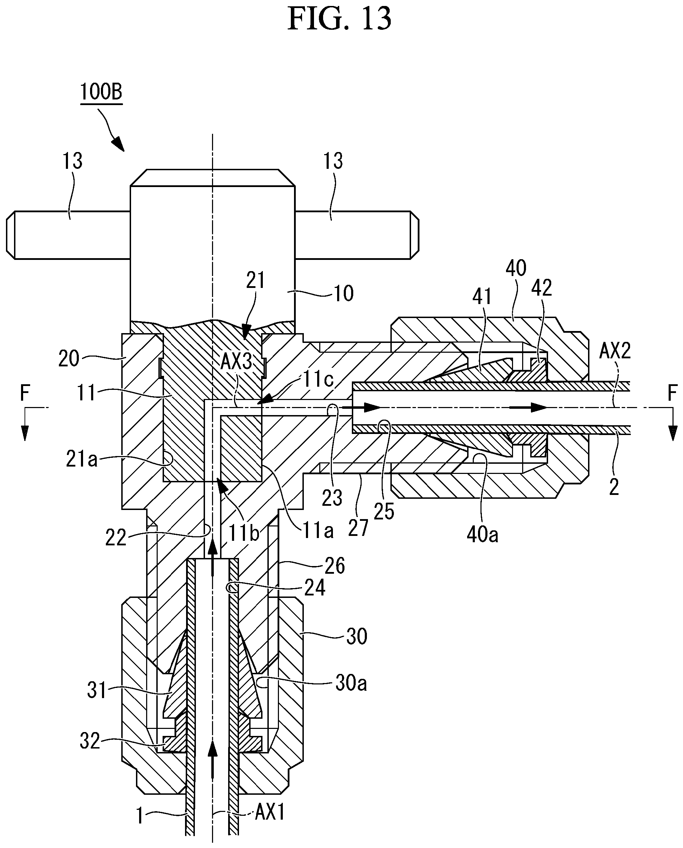

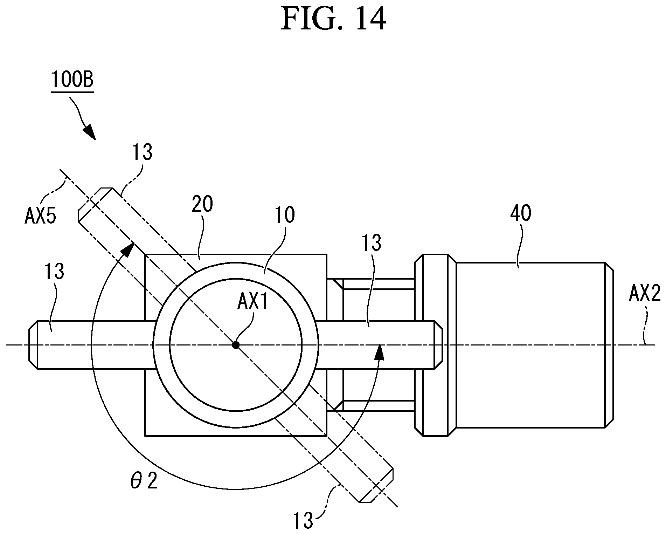

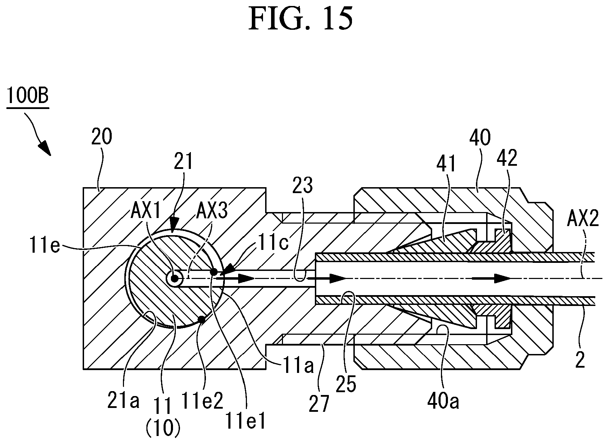

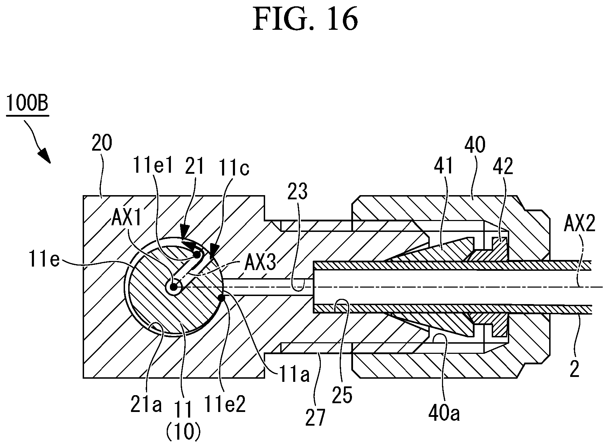

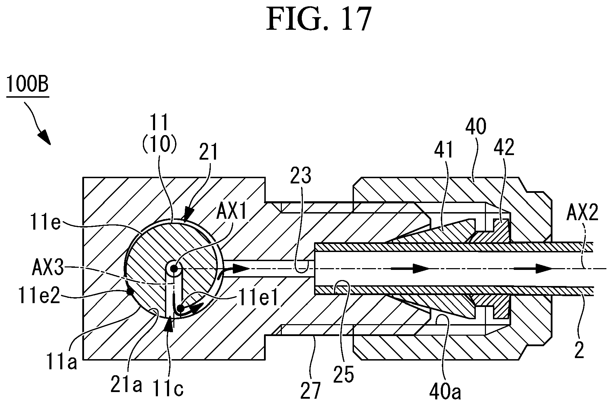

Fig. 13 is a sectional view illustrating the flow rate adjusting device 100B according to the third embodiment of the present invention and illustrates the fully open state. Fig. 14 is a plan view of the flow rate adjusting device 100B illustrated in Fig. 13 when viewed from above. Fig. 15 is an arrow F-F sectional view of the flow rate adjusting device 100B illustrated in Fig. 13. Fig. 16 is a sectional view illustrating the flow rate adjusting device 100B according to the third embodiment of the present invention and illustrates the fully closed state. Fig. 17 is a sectional view illustrating the flow rate adjusting device 100B according to the third embodiment of the present invention and illustrates the flow rate adjusting state.

As illustrated in Fig. 13 and Fig. 15, the second member 20 of the flow rate adjusting device 100B has the inflow channel 22 formed extending along the first axis AX1 and configured to guide a fluid from the inflow pipe 1, which is connected to the second member 20, to the inflow hole 11b of the valve portion 11. The valve portion 11 has the inflow hole 11b into which a fluid flows along the first axis AX1.

As illustrated in Fig. 13 and Fig. 15, when the third axis AX3 along which a fluid is guided to the outflow hole 11c of the valve portion 11 and the second axis AX2 along which the outflow channel 23 of the second member 20 extends are arranged so as to match each other, the flow rate adjusting device 100B is in the fully open state where a fluid flows from the inflow channel 22 into the inflow hole 11b of the valve portion 11 and the fluid flows out of the outflow hole 11c to the outflow channel 23.

As illustrated in Fig. 14, when applying the fully open state to the flow rate adjusting device 100B, the operator adjusts the rotational position about the first axis AX1 of the first member 10 so that a pair of knobs 13 are arranged along the second axis AX2. In contrast, when applying the fully closed state to the flow rate adjusting device 100B, the operator adjusts the rotational position about the first axis AX1 of the first member 10 so that the pair of knobs 13 are arranged along a fifth axis AX5 orthogonal to the first axis AX1.

As illustrated in Fig. 14, when switching the flow rate adjusting device 100B from the fully open state to the fully closed state, the operator rotates the knobs 13 by an angle θ2 (for example, 225°) about the first axis AX1. Fig. 16 is a sectional view illustrating the flow rate adjusting device 100B according to the third embodiment of the present invention and illustrates the fully closed state.

As illustrated in Fig. 16, when the third axis AX3 along which a fluid is guided to the outflow hole 11c of the valve portion 11 and the second axis AX2 along which the outflow channel 23 of the second member 20 extends do not match and the outer circumferential face 11a of the valve portion 11 and the outflow channel 23 of the second member 20 are arranged facing each other, the fully closed state where no fluid flows out of the outflow hole 11c to the outflow channel 23 is obtained.

As illustrated in Fig. 16, in the outer circumferential face 11a of the valve portion 11 of the first member 10, the outflow groove 11e is formed circumferentially about the first axis AX1 from the one end 11e1, which is connected to the outflow hole 11c, to the other end 11e2.

When applying the flow rate adjusting state, which is between the fully open state and the fully closed state, to the flow rate adjusting device 100B, the operator moves the knobs 13 to a desired rotational position between the position of the fully open state indicated by the solid line in Fig. 14 and the position of the fully closed state indicated by the dotted line in Fig. 14. Fig. 17 is a sectional view illustrating the flow rate adjusting device 100B according to the third embodiment of the present invention and illustrates the flow rate adjusting state. Fig. 17 illustrates an example in which the operator has adjusted the rotational position of the knobs 13 so that the angle θ2 illustrated in Fig. 14 is 45°.

As illustrated in Fig. 17, the outflow groove 11e forms a flow rate adjusting channel extending circumferentially from the one end 11e1 to the other end 11e2 between the outflow groove 11e and the inner circumferential face 21a of the accommodation hole 21 and connecting the outflow hole 11c and the outflow channel 23 to each other. When the flow rate adjusting device 100B is in the flow rate adjusting state, a fluid flows from the inflow channel 22 into the inflow hole 11b of the valve portion 11, and the fluid is guided from the outflow hole 11c to the outflow channel 23 via the flow rate adjusting channel.

The flow rate of a fluid guided from the outflow hole 11c to the outflow channel 23 changes in accordance with the angle θ2 of the rotational position about the first axis AX1 relative to the rotational position of the knobs 13 in the fully open state. The larger the angle θ2 is, the lower the flow rate of a fluid guided from the outflow hole 11c to the outflow channel 23 is, and the smaller the angle θ2 is, the higher the flow rate of a fluid guided from the outflow hole 11c to the outflow channel 23 is.

According to the flow rate adjusting device 100B of the present embodiment, in the configuration that allows a fluid, which flows from the inflow channel 22 into the valve portion 11 along the first axis AX1, to flow to the outflow channel 23 along the second axis AX2, the flow rate adjusting device 100B can be manufactured at relatively low manufacturing costs, and it is possible to maintain the fluid constant at any flow rate in a relatively low flow rate range.

### [Fourth Embodiment]

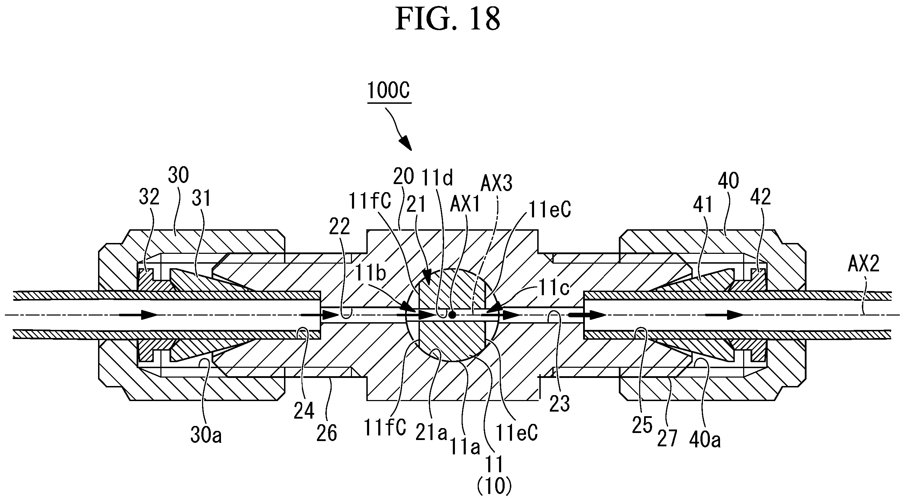

Next, a flow rate adjusting device 100C according to a fourth embodiment of the present invention will be described with reference to the drawings. Since the fourth embodiment is a modified example from the second embodiment, some description thereof will be omitted below as being the same as the second embodiment except as specifically described below. Fig. 18 is a sectional view illustrating the flow rate adjusting device 100C according to the fourth embodiment of the present invention and illustrates the flow rate adjusting state.

In the second embodiment, the inflow groove 11f is formed in a curved line in the outer circumferential face 11a of the valve portion 11, and the outflow groove 11e is formed in a curved line in the outer circumferential face 11a of the valve portion 11. In contrast, in the present embodiment, an inflow groove 11fC is formed in a straight line in a direction orthogonal to the internal channel 11d in the outer circumferential face 11a of the valve portion 11, and an outflow groove 11eC is formed in a straight line in a direction orthogonal to the internal channel 11d in the outer circumferential face 11a of the valve portion 11.

According to the flow rate adjusting device 100C of the present embodiment, the inflow groove 11fC and the outflow groove 11eC are formed in a straight line in the direction orthogonal to the internal channel 11d. Thus, machining to form the inflow groove 11fC and the outflow groove 11eC in the valve portion 11 can be easily performed by moving a machining jig straight.

### [Other Embodiments]

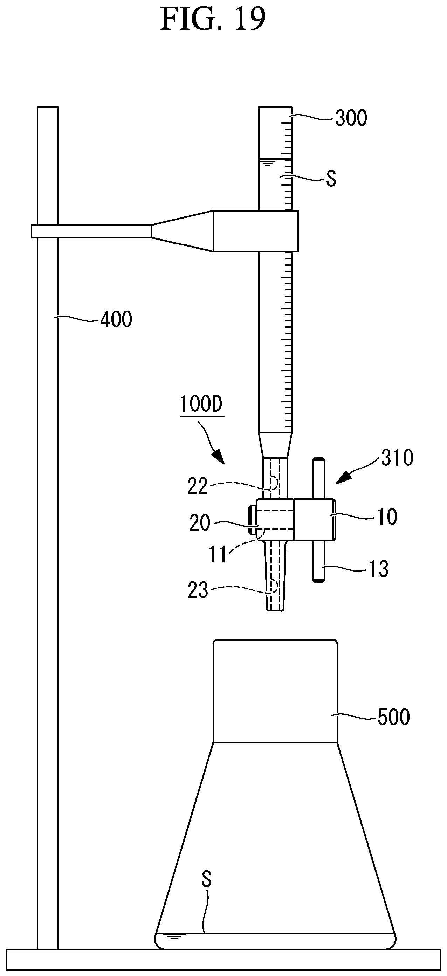

Although the flow rate adjusting device has been described to allow a fluid flowing in from the inflow pipe 1 to flow out of the outflow pipe 2 in the above description, other forms may be employed. For example, the flow rate adjusting device may be used as a cock of a burette fixed to a burette table. Fig. 19 is a diagram illustrating a state where a flow rate adjusting device 100D according to another embodiment of the present invention has been attached as a cock 310 of a burette 300.

The burette 300 is a device that is fixed to a burette table 400 and drops a small amount of a solution S into beaker 500 little by little. In the burette 300, a scale for measuring the drop amount of the solution S is indicated. In the flow rate adjusting device 100D illustrated in Fig. 18, the flow rate of the solution S flowing into the inflow channel 22 is adjusted by the valve portion 11, and thereby the solution S is dropped downward from the outflow channel 23. The operator can adjust the drop amount of the solution S to a desired flow rate (for example, a flow rate of 30 mL/min or lower) by operating the pair of knobs 13 of the flow rate adjusting device 100D used as the cock 310.

## Claims

1. A flow rate adjusting device (100) comprising:
a first member (10) having a valve portion (11), the valve portion (11) being formed in a circularly columnar shape so as to extend along a first axis; and
a second member (20) having an accommodation hole (21), the accommodation hole (21) being formed so as to extend along the first axis and having a circular cross section orthogonal to the first axis,
wherein the first member (10) is accommodated in the second member (20) rotatably about the first axis with an outer circumferential face of the valve portion (11) and an inner circumferential face of the accommodation hole (21) being in contact with each other,
wherein the second member (20) has an outflow channel (23), the outflow channel (23) being formed so as to extend along a second axis orthogonal to the first axis and configured to guide a fluid from the inner circumferential face of the accommodation hole (21) to an outflow pipe connected to the second member (20),
wherein the valve portion (11) has
an inflow hole (11b) into which a fluid flows,
an outflow hole (11c) configured to allow a fluid flowing in from the inflow hole (11b) to flow out along a third axis orthogonal to the first axis, and
at least one outflow groove (11e) formed in the outer circumferential face in a circumferential direction about the first axis from one end connected to the outflow hole (11c),
wherein the outflow groove (11e) forms a flow rate adjusting channel extending in the circumferential direction from the one end to the other end between the outflow groove (11e) and the inner circumferential face of the accommodation hole (21) and connecting the outflow hole (11c) and the outflow channel (23) to each other, and
wherein the sectional area of the flow rate adjusting channel gradually decreases in accordance with a distance in the circumferential direction from the one end of the outflow groove (11e).

2. The flow rate adjusting device (100) according to claim 1,
wherein the second member (20) has an inflow channel (22) formed so as to extend along the second axis and configured to guide a fluid from an inflow pipe connected to the second member (20) to the inner circumferential face of the accommodation hole (21),
wherein the valve portion (11) has
the inflow hole (11b) into which a fluid flows along the third axis, and
at least one inflow groove (11f) formed in the outer circumferential face in the circumferential direction from one end connected to the inflow hole (11b), and
wherein the inflow groove (11f) forms a connection channel extending in the circumferential direction from the one end to the other end between the inflow groove (11f) and the inner circumferential face of the accommodation hole (21) and connecting the inflow channel (22) and the inflow hole (11b) to each other.

3. The flow rate adjusting device (100) according to claim 2, wherein the sectional area of the connection channel gradually decreases in accordance with a distance in the circumferential direction from the one end of the inflow groove (11f).

4. The flow rate adjusting device (100) according to claim 2 or 3, wherein the valve portion (11) has
a pair of outflow grooves formed in the outer circumferential face in the circumferential direction from the outflow hole to one side and the other side, respectively, and
a pair of inflow grooves formed in the outer circumferential face in the circumferential direction from the inflow hole to one side and the other side, respectively.

5. The flow rate adjusting device (100) according to claim 1,
wherein the second member has an inflow channel, the inflow channel being formed so as to extend along the first axis and configured to guide a fluid to the valve portion from an inflow pipe connected to the second member, and
wherein the valve portion has the inflow hole into which a fluid flows along the first axis.
